# FASCICULE DE BREVET EUROPEEN

(11) **EP 4 366 243 B1**
(45) Date de publication et mention de la délivrance du brevet: **04.11.2026**
(21) Numéro de dépôt: 23206152.3
(22) Date de dépôt: 26.10.2023
(51) Int. Cl.: H04L 12/18

(54) **PROCÉDÉ DE TRAITEMENT DE FLUX DE DONNÉES D'UNE SESSION DE CONFÉRENCE PAR UN SERVEUR DE SESSION**
VERFAHREN ZUR VERARBEITUNG VON DATENSTRÖMEN EINER KONFERENZSITZUNG DURCH EINEN SITZUNGSSERVER
METHOD FOR PROCESSING DATA FLOWS OF A CONFERENCE SESSION BY A SESSION SERVER

(30) Priorité: 04.11.2022 FR 2211519
(43) Date de publication de la demande: 08.05.2024
(73) Titulaire: Streamwide, 75010 Paris (FR)
(72) Inventeur: PREVITALI, M. Florent, 94100 SAINT MAUR DES FOSSES (FR)
(74) Mandataire: Plasseraud IP

(56) Documents cités:
- EP-A1- 1 708 471
- WO-A1-2021/093882
- US-B1- 7 627 629

## Description

### Domaine technique

La présente divulgation relève du domaine des échanges de données et flux transitant par des réseaux utilisant des protocoles internet dans le cadre de conférences (audio et/ou vidéo).

### Technique antérieure

Les échanges de données transitant par des réseaux utilisant des protocoles internet sont largement répandus dans le cadre de conférences entre des participants distants. Notamment, plusieurs applications permettent de tenir des conférences incluant de nombreux participants, lesquels se connectent et participent à la conférence via un dispositif électronique adapté, ou terminal.

Une conférence entre plusieurs participants est généralement gérée, du point de vue de la bande passante et des différents flux de données audios/vidéos à traiter et à transmettre aux différents participants, par un serveur de session qui centralise l'ensemble des traitements et des transmissions des flux de données.

En l'occurrence, la gestion des conférences et le traitement des flux vidéo et audio demandent beaucoup de ressources de calcul au processeur du serveur de session. Les ressources nécessaires sont d'autant plus importantes que le nombre de participants est élevé.

La présente divulgation vient améliorer cette situation.

Le document EP 1708471 A1 divulgue un procédé de traitement de conférence audio entre une pluralité de points d'extrémité communiquant sur un réseau à commutation de paquets. Le document WO 2021/093882 A1 divulgue un procédé de vidéoconférence, appliqué à un terminal de conférence, consiste à recevoir un flux de codes composite envoyé par un serveur ainsi qu'un flux de codes indépendant, tout en recevant la stratégie de décodage et d'affichage envoyée par le serveur.

### Résumé

A cet égard, il est proposé un procédé, mis en oeuvre par un processeur d'un serveur de session, de traitement de paquets de données de flux multimédias d'une session de conférence à laquelle participent une pluralité de terminaux, tel que décrit dans la revendication indépendante 1, et aussi un serveur tel que décrit dans la revendication 6 et un produit programme d'ordinateur tel que décrit dans la revendication 7.

Dans une option, lorsque le serveur de session reçoit un unique flux multimédia en provenance d'un unique terminal émetteur participant à la conférence, le procédé comprend en outre un transfert de l'unique flux multimédia en provenance du terminal émetteur, sans décoder les paquets de données de l'unique flux multimédia, aux terminaux destinataires mettant en œuvre le même codec d'encodage/décodage que celui mis en œuvre par le terminal émetteur.

Dans une option, les paquets de données des flux multimédias émis par les terminaux participant à la conférence sont chiffrés et le procédé comprend en outre : obtenir la clé de chiffrement que chaque terminal applique pour chiffrer les paquets de données des flux multimédias qu'il émet ; et
- lorsque le serveur de session reçoit une pluralité de flux multimédias en provenance d'une pluralité correspondante de terminaux émetteurs participant à la conférence, préalablement au décodage, déchiffrer des paquets de données de la pluralité de flux multimédias reçus des terminaux émetteurs ;
   postérieurement à l'encodage, chiffrer une unique fois les paquets de données mixés et encodés du flux multimédia des terminaux d'un même groupe de terminaux destinataires appliquant la même clé de chiffrement, et
- lorsque le serveur de session reçoit un unique flux multimédia en provenance d'un terminal émetteur participant à la conférence,
   transférer l'unique flux multimédia en provenance du terminal émetteur, sans déchiffrer des paquets de données de ce flux multimédia, aux terminaux destinataires de chaque groupe de terminaux destinataires mettant en œuvre le même codec d'encodage/décodage et appliquant la même clé de chiffrement que le terminal émetteur.

Dans une option, lorsque le serveur de session reçoit deux flux multimédias en provenance de deux terminaux émetteurs différents participant à la conférence et mettant en œuvre un même codec d'encodage, le procédé comprend en outre un transfert du flux multimédia reçu d'un terminal émetteur à l'autre terminal émetteur, et *vice versa,* sans mixage ni décodage.

Dans une option dans laquelle le serveur de session reçoit deux flux multimédias en provenance de deux terminaux émetteurs différents participant à la conférence mettant en oeuvre un même codec d'encodage et présentant également une même clé de chiffrement, les transferts de flux multimédias d'un terminal émetteur à l'autre terminal émetteur, et *vice versa,* sont mis en oeuvre sans déchiffrement par le serveur de session.

Dans une option, le procédé comprend l'étape préalable suivante :
déterminer un taux d'utilisation du processeur du serveur de session ; et
   - lorsque le taux d'utilisation du calculateur du serveur de session est supérieur à un taux d'utilisation prédéterminé,
gérer chaque flux multimédia reçu par le serveur de session comme un flux multimédia unique en provenance d'un unique terminal émetteur participant à la conférence.

Dans une option, un flux multimédia correspond à un flux audio ou un flux vidéo.

Dans une option dans lequel les flux multimédias correspondent à des flux audios, le procédé peut en outre comprendre, préalablement au mixage des flux multimédia, une sélection d'un nombre prédéterminé de flux audios présentant les volumes les plus élevés parmi les flux de données audio reçus des terminaux émetteurs. Dans cette option, le mixage des flux multimédias correspond à un mixage limité aux flux audios sélectionnés.

Le procédé selon la présente divulgation permet donc d'économiser des ressources de calcul d'un calculateur d'un serveur de session assurant la distribution des flux de données multimédias d'une session de conférence en agrégeant astucieusement les opérations d'encodage, et éventuellement de chiffrement, des flux multimédias à destination de terminaux destinataires de flux similaires (notamment mettant en oeuvre un même encodage) et éventuellement une même clé de chiffrement. La réduction de la charge du calculateur du serveur de session est donc d'autant plus importante qu'il y a de participants à la session de conférence.

Par ailleurs, dans des exemples, le procédé présenté prévoit également que lorsque le serveur de session reçoit seulement un ou seulement deux flux multimédias pendant un intervalle de temps déterminé, le calculateur exécute des opérations spécifiques qui permettent de sauvegarder ses ressources de calcul. L'inventeur a remarqué que, en pratique dans une session de conférence, seul un ou deux participants interviennent simultanément pendant une grande partie du temps que dure la session. Par conséquent, les opérations spécifiques proposées pour traiter ces situations particulières sont extrêmement avantageuses et permettent au calculateur de préserver des ressources de calculs presque tout au long de la session de conférence.

### Brève description des dessins

D'autres caractéristiques, détails et avantages apparaîtront à la lecture de la description détaillée ci-après, et à l'analyse des dessins annexés, sur lesquels :
**Fig. 1**

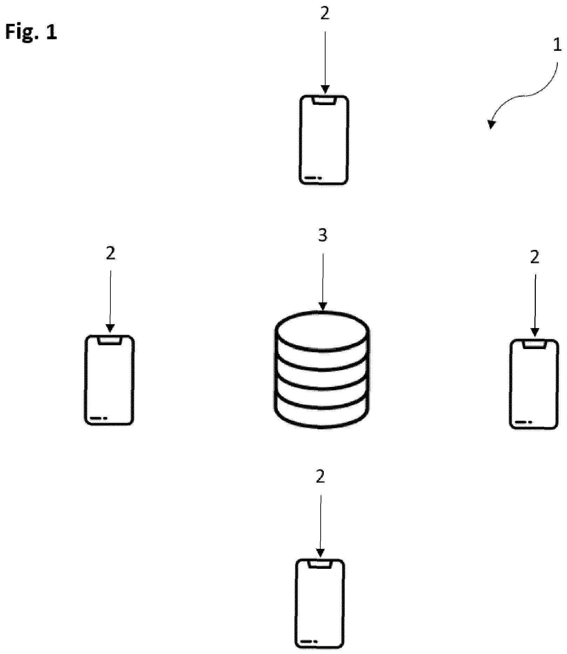

   [Fig. 1] représente schématiquement un exemple d'architecture de communication dans laquelle un procédé de traitement de paquets de données de flux multimédias d'une session de conférence peut être mis en oeuvre.
**Fig. 2**

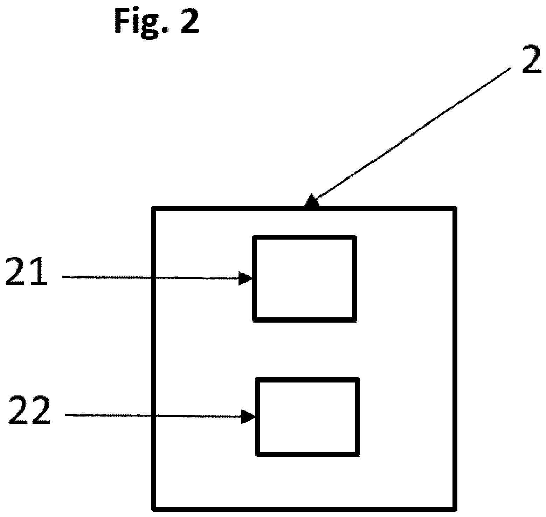

   [Fig. 2] représente un exemple de terminal.
**Fig. 3**

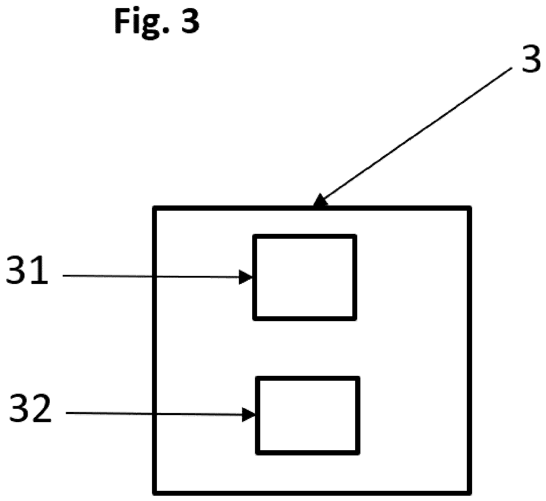

   [Fig. 3] représente un exemple de serveur de session.
**Fig. 4**

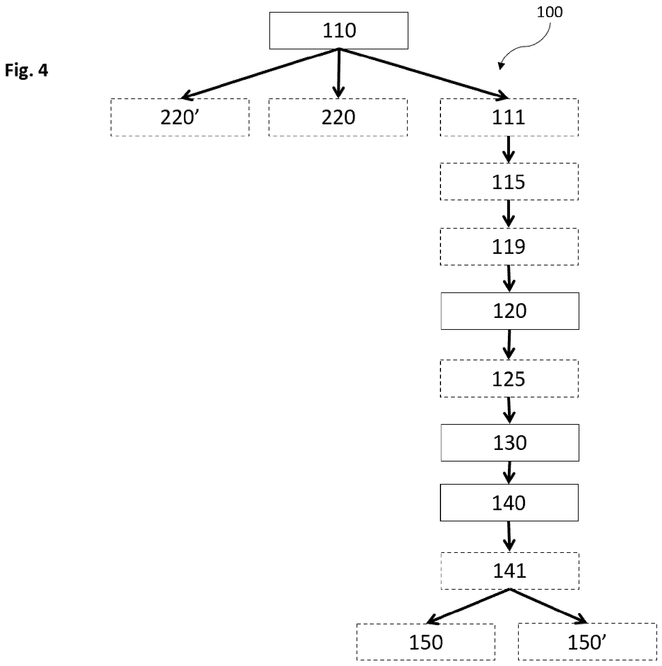

   [Fig. 4] représente un exemple de procédé de traitement de paquets de données de flux multimédias d'une session de conférence.

### Description des modes de réalisation

Il est maintenant décrit en référence à la figure 1 un exemple d'architecture de communication 1 dans laquelle un procédé de traitement de paquets de données de flux multimédias d'une session de conférence à laquelle participent une pluralité de terminaux 2 peut être effectué.

Un flux multimédia peut correspondre à un flux de données audio ou à un flux de données vidéo ou à une combinaison des deux. Le procédé de traitement de paquets de données de flux multimédias présenté en référence à la figure 4 peut aussi bien s'appliquer à un flux de données audio qu'à un flux de données vidéo sauf lorsque la description de la présente divulgation indique le contraire. Notamment, les opérations représentées en pointillés sur la figure 4 sont avantageux mais facultatifs.

Un flux de données, ou un flux, est défini dans la présente divulgation comme correspondant à au moins deux paquets de données successifs. Un flux de données audio, ou flux audio, est défini comme correspondant à au moins deux paquets de données audio successifs. Un flux de données vidéo, ou flux vidéo, est défini comme correspondant à au moins deux paquets de données vidéo successifs.

L'architecture de communication 1 comprend un serveur de session 3 et une pluralité de terminaux 2. La pluralité de terminaux 2 participe à une session de conférence leur permettant d'échanger, en quasi-temps réel, des flux multimédias entre eux. Les flux multimédias émis par des terminaux 2 émetteurs durant la session de conférence sont envoyés au serveur de session 3 qui peut les distribuer à destination des terminaux 2 destinataires participant à la session de conférence.

Une distribution est dite directe entre le serveur de session 3 et un terminal 2 lorsque le serveur de session 3 envoie directement les paquets de données du flux de données à ce terminal 2. Une distribution est dite indirecte entre le serveur de session 3 et un terminal 2 lorsque le serveur de session 3 envoie les paquets de données du flux de données à un dispositif intermédiaire, ou relais, par exemple un autre serveur, avant que les paquets de données du flux de données ne soient envoyés au terminal.

Il doit être noté qu'un terminal 2 émetteur d'un premier flux multimédia peut, ultérieurement ou simultanément, être un terminal 2 destinataire d'un deuxième flux multimédia émis par un autre terminal 2 émetteur participant à la session de conférence.

La session de conférence peut ainsi désigner une audioconférence dans laquelle des terminaux 2 peuvent être amenés à échanger, en quasi temps réel, des flux audios par l'intermédiaire d'un serveur de session 3.

La session de conférence peut également désigner une visioconférence dans laquelle des terminaux 2 peuvent être amenés à échanger, en quasi temps réel, des flux vidéos, et éventuellement des flux audios, par l'intermédiaire d'un serveur de session 3.

Lors de la session de conférence, les paquets de données des flux multimédias émis par les terminaux 2 sont encapsulés selon un protocole internet. Ce protocole est notamment défini dans la norme RFC 791.

Dans l'exemple décrit ici, les flux de données échangés par les terminaux lors de la session de conférence sont encapsulés selon un protocole RTP (« Real-time Transport Protocol ») ou SRTP (« Secure Real-time Transport Protocol »).

Un flux de données encapsulé selon un protocole RTP doit être compris dans la présente demande comme un flux de données UDP (« User Datagram Protocol ») agencé de façon à respecter un protocole RTP, c'est-à-dire de façon à respecter un protocole notamment défini par la norme RFC 3550. En particulier, lorsqu'un flux de données RTP est chiffré de façon à respecter un protocole SRTP, c'est-à-dire conformément à la norme RFC 3711, on parle de flux de données SRTP.

Un flux multimédia émis par un terminal émetteur lors de la session de conférence est par ailleurs encodé par un codec d'encodage mis en oeuvre par le terminal émetteur. En fonction du type de données du flux multimédia, audio et/ou vidéo, les codecs d'encodage sont différents.

Dans des exemples, un codec d'encodage audio peut correspondre à l'un parmi les suivants : GSM, iLBC, ITU, Speex, LPC, DoD CELP. Dans des exemples, un codec d'encodage vidéo peut correspondre à l'un parmi les suivants : VP8, H264.

Ainsi, lorsqu'un terminal 2 émetteur émet un flux multimédia lors de la session de conférence, les paquets de données de ce flux multimédia sont encapsulés selon un protocole internet, sont encodés par un codec d'encodage, sont éventuellement chiffrés par une clé de chiffrement, puis sont envoyés à destination du serveur de session 3 qui peut, à son tour, les distribuer aux terminaux 2 destinataires participant à la session de conférence.

Un terminal 2 peut correspondre à un appareil de communication fixe ou mobile.

Un exemple de terminal 2 est notamment représenté en figure 2.

Dans des exemples et comme illustré par la figure 2, le terminal 2 peut comprendre un microphone 21, ou être relié à un microphone 21 en tant que périphérique, pour acquérir un flux audio. Le terminal 2 peut comprendre une caméra 22, ou être relié à une caméra 22 en tant que périphérique, pour acquérir un flux vidéo.

Un serveur de session 3 peut par exemple correspondre à un serveur multimédia (connu sous la dénomination anglaise de « media server »).

Comme représenté en figure 3, le serveur de session 3 comprend un calculateur 31 configuré pour commander l'exécution de l'un quelconque des modes de réalisation du procédé de la présente divulgation. Le serveur de session 3 peut comprendre une mémoire 32 auquel le calculateur 31 a accès. La mémoire 32 peut être configurée pour stocker les instructions (ou code) exécutées par le calculateur 31, notamment pour la mise en oeuvre du procédé. La mémoire 32 peut également être configurée pour stocker des paquets de données de flux multimédias que le serveur de session 3 reçoit des terminaux 2 émetteurs participant à la session de conférence.

Le calculateur 31 peut par exemple être de type processeur, microprocesseur, microcontrôleur, FPGA, etc. La mémoire 32 peut par exemple comprendre une mémoire ROM (« Read-Only Memory »), une mémoire RAM (« Random Access Memory »), une mémoire EEPROM (« Electrically Erasable Programmable Read-Only Memory ») ou tout autres types de moyens de stockage adaptés. La mémoire peut par exemple comprendre des moyens de stockage optique, électronique ou encore magnétique.

Il est maintenant décrit, en référence à la figure 4, un procédé de traitement de paquets de données de flux multimédias d'une session de conférence à laquelle participent une pluralité de terminaux 2. Ce procédé est mis en œuvre par un calculateur 31 d'un serveur de session 3 par exemple tels que décrits ci-avant. Les paquets de données de flux multimédias sont envoyés par au moins un terminal 2 émetteur parmi les terminaux 2 participant à la session de conférence.

Comme illustré par l'opération 110, le procédé 100 comprend, ici, une identification du codec d'encodage mis en œuvre par chacun des terminaux 2 participant à la conférence. Il s'agit de déterminer avec quel codec d'encodage chacun des terminaux 2 encode les flux multimédias qu'il envoie au serveur de session 3.

Ensuite, lorsque le serveur de session 3 reçoit une pluralité de flux multimédias en provenance d'une pluralité correspondante de terminaux 2 émetteurs participant à la conférence, le procédé 100 comprend également la mise en œuvre des opérations 120, 130 et 140 décrits ci-après. La réception de la pluralité de flux multimédias par le serveur de session 3 est, ici, au moins en partie concomitante. Il s'agit par exemple, lors d'une audioconférence, de la situation dans laquelle une pluralité de participants à l'audioconférence parlent en même temps et chacun de leur terminal 2 envoi un flux audio au serveur de session 3. Le serveur de session 3 reçoit donc une pluralité de flux audios, au moins en partie simultanément. Lors d'une visioconférence, il s'agit par exemple d'une pluralité de participants à la visioconférence qui ont activé leur caméra et dont chaque terminal envoie un flux vidéo au serveur de session 3. Le serveur de session 3 reçoit donc une pluralité de flux vidéos au moins en partie simultanément. En d'autres termes, les opérations 120, 130 et 140 sont mises en œuvre lorsque le serveur de session 3 reçoit une pluralité de flux multimédias en provenance d'une pluralité correspondante de terminaux émetteurs pendant un même intervalle de temps.

Comme illustré en figure 4, le procédé 100 comprend une opération 120 de décodage des paquets de données de la pluralité de flux multimédias reçus des terminaux 2 émetteurs. Dans la mesure où le codec d'encodage des flux multimédias des terminaux 2 participant à la conférence a été identifié lors de l'opération 110 du procédé 100, le calculateur 31 du serveur de session 3 est en mesure de décoder les paquets de données des flux multimédias reçus des terminaux 2 émetteurs en mettant en œuvre un décodage compatible avec le mode d'encodage mis en œuvre par chacun des terminaux 2 émetteurs.

Comme illustré en figure 4, le procédé 100 comprend une opération 130 de mixage des paquets de données de flux multimédias reçus (et décodés). Autrement dit, les flux reçus sont mixés les uns avec les autres pour former un unique flux mixé. Les terminaux 2 destinataires désignent les terminaux auxquels le flux de données mixé est distribué par le serveur de session 3.

Comme illustré en figure 4, le procédé 100 comprend une opération 140 d'encodage unique des paquets de données du flux multimédia mixé pour chaque groupe de terminaux 2 destinataires mettant en œuvre un même codec d'encodage/décodage. Le calculateur 31 du serveur de session 3 utilise donc, une unique fois par groupe de terminaux 2 destinataires mettant en œuvre un même codec d'encodage/décodage, l'opération d'encodage du flux mixé. Dit encore autrement, le flux mixé non encore encodé est dupliqué en autant de flux mixé encodé qu'il existe de groupe de terminaux 2 destinataires utilisant un même codec d'encodage/décodage.

Contrairement à ce qu'il est usuel de faire, il n'est donc plus nécessaire d'encoder un flux autant de fois qu'il y a de terminaux destinataires. Les opérations d'encodage sont réduites en nombre et les ressources nécessaires, notamment celle du calculateur 31 et de la bande passante des réseaux, sont donc réduites.

Dans les procédés de l'art antérieur, les serveurs de session sont généralement configurés pour mettre en œuvre un fil d'exécution (connu sous la dénomination anglaise « thread ») composé d'une pluralité d'instructions (sous forme de lignes de code informatique) pour chaque terminal participant à la session de conférence dans le but de distribuer à chacun des terminaux les paquets de données qui lui sont destinés. Dans ces procédés de l'art antérieur, chaque fil d'exécution est dupliqué pour chaque terminal destinataire, y compris lorsqu'un même flux avec le même encodage est transmis à plusieurs terminaux. Le procédé selon la présente divulgation propose au contraire d'opérer une seule et unique fois cet encodage pour tous les terminaux destinataires d'un flux mixé fonctionnant avec un même encodage, i.e. partageant donc une même opération d'encodage.

Dans des exemples, un encodage 140 unique des paquets de données du flux multimédia mixé pour chaque groupe de terminaux destinataires mettant en œuvre un même encodage/décodage comprend une exécution :
- d'une fonction informatique encodant une unique fois le flux multimédia mixé avec un codec d'encodage déterminé partagé par un groupe de terminaux destinataires ; puis
- d'une pluralité de fils d'exécution de distribution du flux mixé et encodé, dans lequel chaque fil d'exécution de la pluralité de fils d'exécution est associé à un terminal 2 destinataire du groupe de terminaux destinataires et est configuré pour récupérer le flux mixé et encodé afin de le distribuer au terminal destinataire auquel il est associé.

Le procédé présenté ici permet donc d'économiser des opérations d'encodage au calculateur 31 du serveur de session 3 en utilisant un encodage unique du flux mixé pour chacun des terminaux destinataires du flux mixé mettant en œuvre un même codec d'encodage.

Dans des exemples, lorsque le serveur de session 3 reçoit un unique flux multimédia en provenance d'un unique terminal 2 émetteur, le procédé 100 peut comprendre la mise en œuvre d'une opération 220 décrite ci-après. La réception d'un unique flux multimédia par le serveur de session 3 désignée ici fait référence à un unique flux multimédia émis par un unique terminal participant à la session de conférence et reçu par le serveur de session 3 dans un intervalle de temps déterminé. Il s'agit par exemple, lors d'une audioconférence, de la situation dans laquelle un seul participant à l'audioconférence parle pendant que les autres participants ont désactivé leur microphone. Le serveur de session 3 reçoit donc un unique flux audio pendant l'intervalle de temps déterminé. Lors d'une visioconférence, il s'agit par exemple de la situation dans laquelle un unique participant à la visioconférence a activé sa caméra pendant que les autres participants l'ont désactivée. Le serveur de session 3 reçoit donc un unique flux vidéo pendant l'intervalle de temps déterminé.

L'opération 220 correspond à un transfert de l'unique flux multimédia en provenance du terminal 2 émetteur aux terminaux 2 destinataires mettant en œuvre le même codec d'encodage que celui mis en œuvre par le terminal 2 émetteur. Ce transfert est effectué sans décoder les paquets de données de l'unique flux multimédia.

Ces exemples permettent d'éviter, dans une telle situation, au calculateur 31 du serveur de session 3 de décoder le flux multimédia émis par le terminal émetteur avant de le distribuer aux terminaux destinataires partageant le même codec d'encodage que le terminal émetteur. Le calculateur 31 du serveur de session 3 économise donc une opération de décodage.

Dans des exemples, les paquets de données des flux multimédias émis par les terminaux participant à la session de conférence sont chiffrés. Cela permet de protéger les données échangées par les terminaux participants. Il s'agit en l'occurrence d'un système de chiffrement symétrique, c'est-à-dire que les paquets d'un flux multimédia émis par un terminal participant à la conférence sont chiffrés avec la même clé de chiffrement que celle utilisée par ce terminal pour déchiffrer les flux multimédias qu'il reçoit.

Dans les exemples dans lesquels les paquets de données des flux multimédias émis par les terminaux participant à la conférence sont chiffrés, le procédé 100 peut comprendre la mise en œuvre d'une opération 111.

L'opération 111 correspond à une obtention de la clé de chiffrement que chaque terminal applique pour chiffrer les paquets de données des flux multimédias qu'il émet.

Dans les exemples dans lesquels les paquets de données des flux multimédias émis par les terminaux participant à la conférence sont chiffrés, et lorsque le serveur de session 3 reçoit une pluralité de flux multimédias en provenance d'une pluralité correspondante de terminaux émetteurs participant à la conférence, le procédé 100 peut comprendre la mise en œuvre des opérations 119 et 141. En d'autres termes, le procédé 100 peut comprendre la mise en œuvre des opérations 119 et 141 lorsque le serveur de session 3 reçoit une pluralité de flux multimédias chiffrés en provenance d'une pluralité correspondante de terminaux émetteurs pendant un même intervalle de temps.

L'opération 119 est effectuée préalablement au décodage des paquets de données de la pluralité de flux multimédias reçus des terminaux émetteurs effectué à l'opération 120. L'opération 119 correspond à un déchiffrement des paquets de données de la pluralité de flux multimédias reçus des terminaux émetteurs.

L'opération 141 est effectuée quant à elle postérieurement à l'encodage unique des paquets de données du flux multimédia mixé pour chaque groupe de terminaux destinataires mettant en œuvre un même codec d'encodage (opération 140). L'opération 141 correspond à un chiffrement unique (comprendre « en une seule fois ») des paquets de données mixés et encodés du flux multimédia des terminaux d'un même groupe de terminaux destinataires appliquant la même clé de chiffrement.

Ainsi, dans un mode de réalisation dans lequel les flux multimédias sont chiffrés, le procédé 100 propose un chiffrement unique du flux multimédia mixé et encodé pour les terminaux d'un groupe de terminaux destinataires qui partagent la même clé de chiffrement. Au contraire, dans les procédés de l'art antérieur, chaque fil d'exécution associé à un terminal destinataire comprend des instructions pour opérer un encodage et un chiffrement de sorte que le chiffrement est généralement mis en œuvre autant de fois qu'il y a de terminaux destinataires. Dans ce mode de réalisation, le procédé selon la présente divulgation propose au contraire d'opérer une seule et unique fois le chiffrement pour les terminaux destinataires d'un même flux mixé et encodé qui partagent la même clé de chiffrement. Le calculateur 31 du serveur de session 3 économise donc des opérations de chiffrement chaque fois qu'il y a plusieurs terminaux destinataires qui partagent un même codec d'encodage et une même clé de chiffrement parmi les terminaux destinataires du flux mixé.

Dans les exemples dans lesquels les paquets de données des flux multimédias émis par les terminaux participant à la conférence sont chiffrés, et lorsque le serveur de session 3 reçoit un unique flux multimédia en provenance d'un terminal émetteur participant à la conférence, le procédé 100 peut en outre comprendre l'exécution d'une opération 220'. En d'autres termes, le procédé 100 peut comprendre la mise en œuvre de l'opération 220' lorsqu'un unique flux multimédia chiffré est reçu par le serveur de session 3 pendant un intervalle de temps déterminé.

L'opération 220' correspond à un transfert de l'unique flux multimédia en provenance du terminal émetteur aux terminaux destinataires mettant en œuvre le même codec d'encodage et appliquant la même clé de chiffrement que le terminal émetteur. Ce transfert est mis en œuvre sans déchiffrer ni décoder les paquets de données de ce flux multimédia.

Ces exemples permettent d'éviter au calculateur du serveur de session 3 de déchiffrer le flux multimédia avant de le distribuer aux terminaux destinataires de la session de conférence partageant le même codec d'encodage et la même clé de chiffrement que le terminal émetteur. Le calculateur 31 du serveur de session 3 économise donc une opération de déchiffrement en plus de l'opération de décodage décrite ci-avant.

Dans des exemples, lorsque le serveur de session reçoit deux flux multimédias en provenance de deux terminaux émetteurs différents participant à la conférence et mettant en œuvre un même codec d'encodage, le procédé 100 peut en outre mettre en œuvre une opération 150. En d'autres termes, le procédé 100 peut comprendre la mise en œuvre l'opération 150 lorsque deux flux multimédias émis par deux terminaux émetteurs mettant en œuvre un même codec d'encodage sont reçus par le serveur de session 3 au cours d'un même intervalle de temps.

L'opération 150 correspond au transfert du flux multimédia reçu d'un terminal émetteur à l'autre terminal émetteur, et *vice versa,* sans mixage ni décodage. Ainsi, le calculateur 31 du serveur de session 3 transfert le flux multimédia du premier terminal émetteur au deuxième terminal émetteur et transfert le flux multimédia du deuxième terminal émetteur au premier terminal émetteur, sans opération de mixage ni décodage.

En effet, les terminaux émetteurs ne reçoivent pas nécessairement le même flux mixé que les terminaux qui sont uniquement destinataires. Dans les procédés de l'art antérieur, un traitement du flux multimédia distribué aux terminaux qui sont à la fois émetteurs et destinataires est habituellement opérée afin de supprimer (filtrer) leur propre flux multimédia émis, afin d'éviter les effets d'échos et que la personne qui parle s'entende elle-même en retour. Un tel traitement est appliqué indépendamment du nombre de terminaux émetteurs simultané (deux ou plus de deux). Lors d'une audioconférence, plusieurs participants à l'audioconférence qui parlent en même temps ne veulent pas nécessairement entendre leur propre voix en écho. À cet effet, seule la voix des autres participants leur est transmise. Le serveur de session 3 leur adresse donc un flux audio mixé comprenant la voix des autres participants sans leur propre voix, c'est-à-dire qu'il leur adresse un flux audio mixé comprenant les flux des terminaux émetteurs à l'exception de leur propre flux audio.

Or, le cas de deux (et pas plus de deux) flux multimédias en provenance de deux terminaux émetteurs différents est particulier dans la mesure où un mixage des deux flux multimédias à destination d'un terminal émetteur spécifique parmi les deux terminaux émetteurs peut correspondre à mixer les deux flux des terminaux émetteurs, puis à supprimer (filtrer) le flux multimédia du terminal spécifique. Selon des modes de réalisation de la présente divulgation, un tel résultat peut être obtenu en identifiant la situation dans laquelle seuls deux terminaux sont émetteurs simultanément, puis en transférant le flux multimédia reçu d'un terminal émetteur à l'autre terminal émetteur, et *vice versa,* sans mixage ni décodage lorsque ces terminaux partagent un même codec d'encodage. En effet, chacun des terminaux émetteurs est capable de décoder le flux de l'autre terminal émetteur puisqu'ils partagent le même codec d'encodage et il n'est pas nécessaire de leur faire parvenir un flux multimédia mixé puisque le flux multimédia mixé qui leur sera adressé correspond en réalité au flux multimédia de l'autre terminal émetteur. Le serveur de session 3 économise donc une opération de décodage, de mixage, et d'encodage pour chacun des deux flux multimédias des terminaux émetteurs.

Dans des exemples, lorsque le serveur de session 3 reçoit deux flux multimédias chiffrés en provenance de deux terminaux émetteurs différents participant à la conférence, mettant en oeuvre un même codec d'encodage, et appliquant une même clé de chiffrement, le procédé 100 peut en outre inclure une opération 150'. En d'autres termes, le procédé 100 peut comprendre la mise en oeuvre de l'opération 150' lorsque deux flux multimédias chiffrés émis par deux terminaux émetteurs mettant en oeuvre un même codec d'encodage et appliquant une même clé de chiffrement sont reçus par le serveur de session 3 pendant un même intervalle de temps.

L'opération 150' correspond à un transfert du flux multimédia reçu d'un terminal émetteur à l'autre terminal émetteur, et *vice versa,* sans mixage, ni décodage, ni déchiffrement. Le calculateur 31 du serveur de session 3 économise donc une opération de déchiffrement, de décodage, de mixage, d'encodage et de chiffrement pour chacun des deux flux multimédias des terminaux émetteurs.

Dans des exemples, et comme représenté en figure 4, le procédé 100 peut comprendre une opération 115 de détermination d'un taux d'utilisation du calculateur 31 du serveur de session 3.

Dans des exemples dans lesquels un taux d'utilisation du calculateur 31 du serveur de session est déterminé comme étant supérieur à un taux d'utilisation déterminé, le procédé 100 peut comprendre une gestion de chaque flux multimédia reçu par le serveur de session 3 comme un flux multimédia unique en provenance d'un unique terminal émetteur participant à la conférence. Par conséquent, dans ces exemples, un flux multimédia reçu par le serveur de session 3 est transféré aux terminaux destinataires de ce flux multimédia sans mixage avec les autres flux reçus par le serveur de session et sans décodage de ce flux pour les terminaux destinataires qui partagent le même codec d'encodage que le terminal émetteur. Le calculateur 31 du serveur de session 3 économise donc une opération de décodage, de mixage et d'encodage pour chacun des terminaux destinataires de ce flux partageant le même codec d'encodage que le terminal émetteur.

Par ailleurs, lorsqu'il s'agit d'un flux multimédia chiffré, ce flux multimédia est transféré aux terminaux destinataires de ce flux multimédia sans mixage avec les autres flux reçus par le serveur de session 3 et sans décodage ni déchiffrement de ce flux pour les terminaux destinataires qui partagent le même codec d'encodage et appliquent la même clé de chiffrement que le terminal émetteur. Le calculateur 31 du serveur de session 3 économise donc une opération de déchiffrement, de décodage, de mixage, d'encodage et de chiffrement pour chacun des terminaux destinataires de ce flux partageant le même codec d'encodage et appliquant la même clé de chiffrement que le terminal émetteur. Autrement dit, la répartition de la charge de calcul entre le serveur de session 3 et les terminaux 2 est rendu flexible et adaptable en fonction de la charge courante du serveur de session 3.

Ces exemples permettent donc de réduire les ressources de calcul du calculateur 31 du serveur de session 3 engagées lorsque le taux d'utilisation de son calculateur 31 est élevé afin de limiter le risque d'altérer la distribution des flux multimédias, ce qui serait préjudiciable pour les participants à la session de conférence.

Dans des exemples dans lesquels les flux multimédias correspondent à des flux audios, le procédé 100 peut en outre comprendre l'exécution d'une opération 125 préalablement à l'exécution de l'opération de mixage 130 de la pluralité de flux multimédias reçus par le serveur de session 3. L'opération 125 correspond à une sélection d'un nombre prédéterminé de flux audios présentant les volumes (sonore) les plus élevés parmi les flux de données audio reçus des terminaux émetteurs. Dans ces exemples, le mixage des flux multimédias de l'opération 130 est limité aux flux audios sélectionnés au cours de l'opération 125. Cela permet de distribuer aux terminaux destinataires un flux mixé composé uniquement des flux audios présentant les volumes les plus élevés, notamment pour filtrer les flux audios les plus faibles, pouvant par exemple correspondre aux bruits ambiants ou parasites autour des participants qui restent silencieux sans avoir désactivé leur microphone.

Le procédé selon la présente divulgation permet donc d'économiser des ressources de calcul d'un calculateur 31 d'un serveur de session 3 assurant la distribution des flux de données multimédias d'une session de conférence en agrégeant astucieusement les opérations d'encodage, et éventuellement de chiffrement, des flux multimédias à destination de terminaux destinataires de flux similaires (notamment mettant en oeuvre un même encodage) et éventuellement une même clé de chiffrement. La réduction de la charge du calculateur 31 du serveur de session 3 est donc d'autant plus importante qu'il y a de participants à la session de conférence.

Par ailleurs, dans des exemples, le procédé présenté prévoit également que lorsque le serveur de session 3 reçoit seulement un ou seulement deux flux multimédias pendant un intervalle de temps déterminé, le calculateur 31 exécute des opérations spécifiques qui permettent de sauvegarder ses ressources de calcul. L'inventeur a remarqué que, en pratique dans une session de conférence, seul un ou deux participants interviennent simultanément pendant une grande partie du temps que dure la session. Par conséquent, les opérations spécifiques proposées pour traiter ces situations particulières sont extrêmement avantageuses et permettent au calculateur de préserver des ressources de calculs presque tout au long de la session de conférence.

## Revendications

1. Procédé, mis en œuvre par un processeur d'un serveur de session, de traitement de paquets de données de flux multimédias d'une session de conférence à laquelle participent une pluralité de terminaux, les paquets de données de flux multimédias étant envoyés par au moins un terminal émetteur parmi les terminaux participant à la session de conférence,
dans lequel des paquets de données de flux multimédias émis par les terminaux participant à la conférence sont chiffrés, encapsulés selon un protocole internet et sont envoyés au serveur de session qui distribue les flux multimédias à destination de terminaux destinataires participant à la session de conférence,
le procédé comprenant :
identifier (110) le codec d'encodage mis en œuvre par chacun des terminaux participant à la conférence ;
obtenir (111) la clé de chiffrement que chaque terminal applique pour chiffrer les paquets de données des flux multimédias qu'il émet ; et
• lorsque le serveur de session reçoit une pluralité de flux multimédias en provenance d'une pluralité correspondante de terminaux émetteurs participant à la conférence,
déchiffrer (119) des paquets de données de la pluralité de flux multimédias reçus des terminaux émetteurs ;
décoder (120) des paquets de données de la pluralité de flux multimédias reçus des terminaux émetteurs ;
mixer (130) des paquets de données de flux multimédias reçus de façon à ce qu'un flux multimédia mixé soit transmis aux terminaux destinataires ;
encoder (140) une unique fois des paquets de données du flux multimédia mixé pour chaque groupe de terminaux destinataires mettant en œuvre un même codec d'encodage/décodage ;
chiffrer (141) une unique fois les paquets de données mixés et encodés du flux multimédia des terminaux d'un même groupe de terminaux destinataires appliquant la même clé de chiffrement,
• lorsque le serveur de session reçoit un unique flux multimédia en provenance d'un terminal émetteur participant à la conférence,
transférer l'unique flux multimédia en provenance du terminal émetteur, sans déchiffrer des paquets de données de ce flux multimédia, aux terminaux destinataires de chaque groupe de terminaux destinataires mettant en œuvre le même codec d'encodage/décodage et appliquant la même clé de chiffrement que le terminal émetteur,
• lorsque le serveur de session reçoit deux flux multimédias en provenance de deux terminaux émetteurs différents participant à la conférence mettant en œuvre un même codec d'encodage et présentant une même clé de chiffrement :
transférer (150) le flux multimédia reçu d'un terminal émetteur à l'autre terminal émetteur, et *vice versa,* sans mixage, sans décodage et sans déchiffrement.

2. Procédé selon la revendication 1, comprenant en outre :
• lorsque le serveur de session reçoit un unique flux multimédia en provenance d'un unique terminal émetteur participant à la conférence,
transférer (220) l'unique flux multimédia en provenance du terminal émetteur, sans décoder les paquets de données de l'unique flux multimédia, aux terminaux destinataires mettant en œuvre le même codec d'encodage/décodage que celui mis en œuvre par le terminal émetteur.

3. Procédé selon la revendication 2, dans lequel le procédé comprend l'étape préalable suivante :
déterminer (115) un taux d'utilisation du processeur du serveur de session ; et
• lorsque le taux d'utilisation du calculateur (31) du serveur de session (3) est supérieur à un taux d'utilisation prédéterminé,
gérer chaque flux multimédia reçu par le serveur de session comme un flux multimédia unique en provenance d'un unique terminal émetteur participant à la conférence.

4. Procédé selon l'une quelconque des revendications précédentes, dans lequel un flux multimédia correspond à un flux audio ou un flux vidéo.

5. Procédé selon la revendication précédente, dans lequel les flux multimédias correspondent à des flux audios, le procédé comprenant en outre, préalablement au mixage des flux multimédias :
sélectionner (125) un nombre prédéterminé de flux audios présentant les volumes les plus élevés parmi les flux de données audio reçus des terminaux émetteurs ;
et dans lequel le mixage des flux multimédias correspond à un mixage limité aux flux audios sélectionnés.

6. Serveur de session (3) comprenant un calculateur (31) configuré pour mettre en œuvre l'un quelconque des procédés selon les revendications 1 à 5.

7. Produit programme d'ordinateur comportant des instructions pour la mise en œuvre de l'un quelconque des procédés selon les revendications 1 à 5 lorsque ce programme est exécuté par un calculateur.

## Patentansprüche

1. Verfahren, durchgeführt von einem Prozessor eines Sitzungsservers, zum Verarbeiten von Datenpaketen von Multimedia-Strömen einer Konferenzsitzung, an der eine Vielzahl von Endgeräten teilnimmt, wobei die Datenpakete von Multimedia-Strömen von mindestens einem sendenden Endgerät unter den an der Konferenzsitzung teilnehmenden Endgeräten gesendet werden,
wobei Datenpakete von Multimedia-Strömen, die von den an der Konferenz teilnehmenden Endgeräten gesendet werden, verschlüsselt, gemäß einem Internetprotokoll verkapselt und an den Sitzungsserver gesendet werden, der die Multimedia-Ströme an Empfängerendgeräte verteilt, die an der Konferenzsitzung teilnehmen,
wobei das Verfahren Folgendes umfasst:
Identifizieren (110) des Kodier-Codecs, der von jedem der an der Konferenz teilnehmenden Endgeräte durchgeführt wird;
Erhalten (111) des Verschlüsselungssschlüssels, den jedes Endgerät anwendet, um die Datenpakete der von ihm gesendeten Multimedia-Ströme zu verschlüsseln; und
• wenn der Sitzungsserver eine Vielzahl von Multimedia-Strömen von einer entsprechenden Vielzahl von sendenden Endgeräten empfängt, die an der Konferenz teilnehmen,
Entschlüsseln (119) von Datenpaketen der Vielzahl von Multimedia-Strömen, die von den sendenden Endgeräten empfangen wurden;
Dekodieren (120) von Datenpaketen der Vielzahl von Multimedia-Strömen, die von den sendenden Endgeräten empfangen wurden;
Mischen (130) von empfangenen Datenpaketen von Multimedia-Strömen, so dass ein gemischter Multimedia-Strom an die Empfängerendgeräte übertragen wird;
ein einziges Mal Kodieren (140) von Datenpaketen des gemischten Multimedia-Stroms für jede Gruppe von Empfängerendgeräten, die einen gleichen Kodier-/Dekodier-Codec durchführen;
ein einziges Mal Verschlüsseln (141) der gemischten und kodierten Datenpakete des Multimedia-Stroms der Endgeräte einer gleichen Gruppe von Empfängerendgeräten, die denselben Verschlüsselungsschlüssel anwenden;
• wenn der Sitzungsserver einen einzigen Multimedia-Strom von einem an der Konferenz teilnehmenden sendenden Endgerät empfängt,
Übertragen des einzigen Multimedia-Stroms von dem sendenden Endgerät, ohne Datenpakete dieses Multimedia-Stroms zu entschlüsseln, an die Empfängerendgeräte jeder Gruppe von Empfängerendgeräten, die den gleichen Kodier-/Dekodier-Codec durchführen und denselben Verschlüsselungsschlüssel anwenden wie das sendende Endgerät;
• wenn der Sitzungsserver zwei Multimedia-Ströme von zwei unterschiedlichen sendenden Endgeräten empfängt, die an der Konferenz teilnehmen, welche einen gleichen Kodier-Codec durchführen und einen gleichen Verschlüsselungsschlüssel aufweisen:
Übertragen (150) des von einem sendenden Endgerät empfangenen Multimedia-Stroms an das andere sendende Endgerät und umgekehrt, ohne Mischen, ohne Dekodieren und ohne Entschlüsseln.

2. Verfahren nach Anspruch 1, ferner umfassend:
• wenn der Sitzungsserver einen einzigen Multimedia-Strom von einem einzigen an der Konferenz teilnehmenden sendenden Endgerät empfängt,
Übertragen (220) des einzigen Multimedia-Stroms von dem sendenden Endgerät, ohne die Datenpakete des einzigen Multimedia-Stroms zu dekodieren, an die Empfängerendgeräte, die den gleichen Kodier-/Dekodier-Codec durchführen wie der von dem sendenden Endgerät durchgeführte.

3. Verfahren nach Anspruch 2, wobei das Verfahren den folgenden vorherigen Schritt umfasst:
Bestimmen (115) einer Auslastungsrate des Prozessors des Sitzungsservers; und
• wenn die Auslastungsrate des Rechners (31) des Sitzungsservers (3) höher als eine vorbestimmte Auslastungsrate ist,
Verwalten jedes vom Sitzungsserver empfangenen Multimedia-Stroms als einen einzigen Multimedia-Strom von einem einzigen an der Konferenz teilnehmenden sendenden Endgerät.

4. Verfahren nach einem der vorhergehenden Ansprüche, wobei ein Multimedia-Strom einem Audiostrom oder einem Videostrom entspricht.

5. Verfahren nach dem vorhergehenden Anspruch, wobei die Multimedia-Ströme Audioströmen entsprechen, wobei das Verfahren ferner, vor dem Mischen der Multimedia-Ströme, Folgendes umfasst:
Auswählen (125) einer vorbestimmten Anzahl von Audioströmen, welche die höchsten Lautstärken unter den von den sendenden Endgeräten empfangenen Audiodatenströmen aufweisen;
und wobei das Mischen der Multimedia-Ströme einem Mischen entspricht, das auf die ausgewählten Audioströme begrenzt ist.

6. Sitzungsserver (3), umfassend einen Rechner (31), der dafür konfiguriert ist, eines der Verfahren nach den Ansprüchen 1 bis 5 durchzuführen.

7. Computerprogrammprodukt, umfassend Anweisungen zur Durchführung eines der Verfahren nach den Ansprüchen 1 bis 5, wenn dieses Programm von einem Rechner ausgeführt wird.

## Claims

1. A method, implemented by a processor of a session server, for processing multimedia stream data packets of a conference session in which a plurality of terminals participate, the multimedia stream data packets being sent by at least one sending terminal among the terminals participating in the conference session,
wherein multimedia stream data packets sent by the terminals participating in the conference are encrypted, encapsulated according to an internet protocol, and are sent to the session server which distributes the multimedia streams to recipient terminals participating in the conference session,
the method comprising:
identifying (110) the encoding codec implemented by each of the terminals participating in the conference;
obtaining (111) the encryption key that each terminal applies to encrypt the data packets of the multimedia streams that it sends; and
• when the session server receives a plurality of multimedia streams from a corresponding plurality of sending terminals participating in the conference,
decrypting (119) data packets of the plurality of multimedia streams received from the sending terminals;
decoding (120) data packets of the plurality of multimedia streams received from the sending terminals;
mixing (130) received multimedia stream data packets such that a mixed multimedia stream is transmitted to the recipient terminals;
encoding (140) only once data packets of the mixed multimedia stream for each group of recipient terminals implementing a same encoding/decoding codec;
encrypting (141) only once the mixed and encoded data packets of the multimedia stream of the terminals of a same group of recipient terminals applying the same encryption key,
• when the session server receives a single multimedia stream from a sending terminal participating in the conference,
transferring the single multimedia stream from the sending terminal, without decrypting data packets of this multimedia stream, to the recipient terminals of each group of recipient terminals implementing the same encoding/decoding codec and applying the same encryption key as the sending terminal;
• when the session server receives two multimedia streams from two different sending terminals participating in the conference implementing a same encoding codec and presenting a same encryption key:
transferring (150) the multimedia stream received from one sending terminal to the other sending terminal, and vice versa, without mixing, without decoding, and without decrypting.

2. The method according to claim 1, further comprising:
• when the session server receives a single multimedia stream from a single sending terminal participating in the conference,
transferring (220) the single multimedia stream from the sending terminal, without decoding the data packets of the single multimedia stream, to the recipient terminals implementing the same encoding/decoding codec as that implemented by the sending terminal.

3. The method according to claim 2, wherein the method comprises the following preliminary step:
determining (115) a utilization rate of the processor of the session server; and
• when the utilization rate of the computer (31) of the session server (3) is greater than a predetermined utilization rate,
managing each multimedia stream received by the session server as a single multimedia stream from a single sending terminal participating in the conference.

4. The method according to any of the preceding claims, wherein a multimedia stream corresponds to an audio stream or a video stream.

5. The method according to the preceding claim, wherein the multimedia streams correspond to audio streams, the method further comprising, prior to mixing the multimedia streams:
selecting (125) a predetermined number of audio streams having the highest volumes among the audio data streams received from the sending terminals;
and wherein the mixing of the multimedia streams corresponds to a mixing limited to the selected audio streams.

6. A session server (3) comprising a computer (31) configured to implement any of the methods according to claims 1 to 5.

7. A computer program product comprising instructions for implementing any of the methods according to claims 1 to 5 when this program is executed by a computer.
